Europäisches Patentamt

European Patent Office

Office européen des brevets

(11) Veröffentlichungsnummer: **0 417 391 A1**

# (12) EUROPÄISCHE PATENTANMELDUNG

(21) Anmeldenummer: 90109018.3

(22) Anmeldetag: 14.05.90

(51) Int. Cl.5: **F16G 11/02**

(30) Priorität: 15.09.89 DE 8911053 U

(43) Veröffentlichungstag der Anmeldung:
20.03.91 Patentblatt 91/12

(84) Benannte Vertragsstaaten:
AT BE CH DE DK ES FR GB GR IT LI NL SE

(71) Anmelder: SAHM-SEILKLEMMEN
GESELLSCHAFT mbH & Co. KG
Oststrasse 15
W-2850 Bremerhaven 29(DE)

(72) Erfinder: Fischer, Dierk, Dipl.-Ing.
Am Hang 11
W-2854 Loxstedt/Nesse(DE)

(74) Vertreter: Eisenführ, Speiser & Strasse
Martinistrasse 24
W-2800 Bremen 1(DE)

(54) Hülsenförmiger Seilklemmenrohling für die Herstellung einer zylindrisch-konischen Seilklemme mit Inspektionsöffnung.

(57) Eine Rohlingshülse zur Herstellung einer Seilklemme mit einem konischen Endabschnitt auf zwei parallelen Seilsträngen mit einer die Lage des nicht durchgehenden Seilstranges im Innern der Seilklemme auch nach dem Preßvorgang sichtbar machenden Inspektionsöffnung besteht aus einem flachovalen Rohrabschnitt, der sich im Bereich des später konischen Seilklemmenabschnitts außenseitig verjüngt und dort mindestens in einer Seitenwand (1) eine Bohrung (4) aufweist. Der Seilklemmenrohling kann in Preßbacken mit einem konischen Abschnitt sicher eingelegt werden und erlaubt die Herstellung einer Seilklemme gemäß Form C der neuen DIN 3093, deren zylindrischer Teil den Grundanforderungen dieser Norm entspricht.

Fig.2    Fig.1

Xerox Copy Centre

EP 0 417 391 A1

# HÜLSENFÖRMIGER SEILKLEMMENROHLING FÜR DIE HERSTELLUNG EINER ZYLINDRISCH-KONISCHEN SEILKLEMME MIT INSPEKTIONSÖFFNUNG

Die Erfindung betrifft einen hülsenförmigen Seilklemmenrohling für die Herstellung einer einen durchgehenden Seilstrang mit einem Seilstrangende verbindenden Seilklemme durch umformen des Rohlings zwischen komplementären Preßbacken unter hohem Druck, wobei die im wesentlichen zylindrische Seilklemme einen axial neben dem Seilstrangende liegenden konischen Abschnitt erhält und eine das Seilstrangende von außen sichtbar machende Inspektionsöffnung aufweist,
bestehend aus einem Rohrabschnitt von im wesentlichen flachovalem Querschnitt mit zwei parallelen Seitenwänden und zwei diese verbindenden Halbrundwänden sowie mit einer Bohrung in mindestens einer der Seitenwände, die im Bereich des (späteren) Übergangs vom zylindrischen Abschnitt der Seilklemme in ihren konischen Abschnitt angeordnet ist.

Ein solcher Seilklemmenrohling und die daraus hergestellte Seilklemme mit einem einseitig konischen Ansatz sind aus dem DE-GM 76 06 550.4 bekannt und haben sich in der Praxis bewährt. Der Rohling besteht aus einem Rohrabschnitt von durchgehend gleichem Querschnitt. Er wird zum Verpressen - nach Einführen der Seilstränge - derart in das Preßwerkzeug eingeführt, daß er im später konischen Abschnitt der fertigen Seilklemme in den entsprechend konischen Abschnitt der Preßbacke(n) ragt, was naturgemäß zu einer Schieflage führt, welche allerdings im Laufe des Umformvorganges - bei dem die Bohrung zu einem etwa mandelförmigen Loch wird - verschwindet.

Gleichwohl sind unter Sicherheitsgesichtspunkten Bedenken gegen dieses Vorgehen angemeldet worden, weil die Gefahr besteht, daß bei unsachgemäßer Handhabung - etwa verkantetem Einlegen des Rohlings in die Preßwerkzeuge - es zu Fehlverpressungen kommen könnte. Beim herkömmlichen Verpressen eines flachovalen (flachzylindrischen) Seilklemmenrohlings zu einer durchgehend zylindrischen Seilklemme (DIN 3093) besteht diese Gefahr nicht, weil schon beim einlegen des Seilklemmenrohlings (mit den durch- bzw. eingeführten Seilsträngen) in die untere Preßbacke diese den Rohling über seine ganze Länge umgreift und dadurch ausrichtet. Daher verlangt DIN 3093 (Teil I unter 2.2 der Neufassung Dezember 1988) nun auch bei der Herstellung von Seilklemmen mit einem konischen Endabschnitt ("zylindrisch-kegelige Preßverbindung"), daß eine stabile, horizontale Lage des Seilklemmenrohlings im Preßwerkzeug vor und während des Preßvorganges sichergestellt ist. Ziel der Erfindung ist es, diese Forderung zu erfüllen.

Erfindungsgemäß geschieht dies dadurch, daß sich die Halbrundwände und die Seitenwände des Seilklemmenrohlings im Bereich des (späteren) konischen Abschnitts der Seilklemme zum benachbarten Rohlings-Stirnende hin außenseitig schräg linear verjüngen, und zwar unter einem Winkel, der bei den Halbrundwänden über einen Zenitwinkel von etwa 120° gleich dem Konuswinkel des konischen Seilklemmenabschnitts ist und anschließend kontinuierlich bis zu einem Minimalwert an den Mitten der Seitenwände abnimmt. Da der Kegel- oder Konuswinkel des konischen Abschnitts der Preßbacken naturgemäß dem des entsprechenden Seilklemmenabschnitts entspricht, läßt sich der erfindungsgemäße Seilklemmenrohling vor dem Verpreßvorgang angepaßt in die (untere) Preßbacke einlegen. Das gilt jedenfalls zunächst für den Umfangsbereich von 120° (jeweils 60° beidseits der Zenitpunkte). Es wurde jedoch ferner gefunden, daß eine entsprechend starke Verjüngung auch der Seitenwandbereiche beim Verpressen zum Ausknicken der verjüngten Seitenwandabschnitte führt, und die Erfindung macht sich daher in vorteilhafter Weise den Umstand zunutze, daß die Preßbacken - zum Zwecke des Ausformens - außerhalb des erwähnten 120°-Umfangsbereichs nicht mehr einem Kreisquerschnitt folgen, sondern mehr oder weniger linear divergieren, so daß in diesen Umfangsbereichen - welche in die Seitenwände des Rohlings hineinragen - eine gewisse Zunahme der Wanddicke möglich ist, ohne daß das 'satte' Einlegen des Rohlings in die Preßbacken behindert wird.

Es ist zwar aus dem DE-GM 1 946 544 an sich bekannt, einen Seilklemmenrohling für die Herstellung einer zylindrisch-kegeligen Seilklemme (ohne Inspektionsöffnung) an einem Ende mit verdünnten Wänden auszuführen, welche beim Verpressen in den konischen Abschnitt des Preßwerkzeuges ragen und nach dem Verpressen den konischen Abschnitt der Seilklemme bilden. Jedoch geht die bekannte Verdünnung im wesentlichen gleichmäßig über ihre Länge (in Längsrichtung des Rohlings) durch und dient - zumal sie wahlweise innenseitig und außenseitig vorgesehen sein kann - auch nicht dem verbesserten Einlegen des Rohlings in das Preßwerkzeug. Soweit überhaupt eine über den Umfang ungleichmäßige Verdünnung der Seitenwände vorgesehen ist, entspricht sie nicht der hier vorgeschlagenen und kann auch deren Zielsetzung nicht erreichen.

Vorzugsweise ist bei einer Grunddicke der Halbrund-und Seitenwände vom 0,3 - 0,4fachen (insbesondere 0,38fachen gemäß DIN 3093) des lichten Abstandes am Stirnende die Zenitdicke der verjüngten Halbrundwände auf etwa das 0,12 - 0,15fache (insbesondere das 1,35-fache) des lichten Abstandes verringert, während die entsprechende Dicke an den Mitten der Seitenwände etwa das 0,2 - 0,4fache des lichten Abstandes beträgt. Es hat sich gezeigt, daß die mit einem solchen Seilklemmenrohling hergestellte Seilklemme einen konischen Abschnitt hat, der ausreichend dünn ausläuft und den Seilstrang gut umschließt, andererseits auf diesen aber auch keine seine Tragfähigkeit erkennbar herabsetzende Querbelastung ausübt.

Es hat sich ferner als vorteilhaft erwiesen, die Bohrung in der Seitenwand bzw. den Seitenwänden des Seilklemmenrohlings so anzuordnen, daß der Mittenabstand der Bohrung vom verjüngten Stirnende etwa gleich dem lichten Abstand der Seitenwände ist. Wird diese Regel eingehalten, so wird - bei ansonsten fachgerechter Verarbeitung - das im Innern der Seilklemme liegende Totseilende durch die Inspektionsöffnung nach dem Verpressen sichtbar sein.

Schließlich ist die Anordnung vorzugsweise so getroffen, daß der Durchmesser der Bohrung größer als der lichte Abstand ist, und zwar zwischen etwa 40% bei relativ kleinem und etwa 10% bei relativ großem Abstand der Seitenwände. Auch diese Maßnahme trägt dazu bei, durch die Größe der Inspektionsöffnung die Festigkeit der Seilklemmen-Preßverbindung nicht zu verringern, andererseits aber ein sicheres Erkennen des Totseilendes zu ermöglichen.

Die Zeichnung veranschaulicht die Erfindung an einem Ausführungsbeispiel, und zwar zeigt:

Fig. 1 den neuen Seilklemmenrohling in Seitenansicht;

Fig. 2 die Ansicht des (in Fig. 1 rechten) Stirnendes; und

Fig. 3 eine Seitenansicht einer mit dem Seilklemmenrohling gemäß Fig. 1 hergestellten Seilklemme.

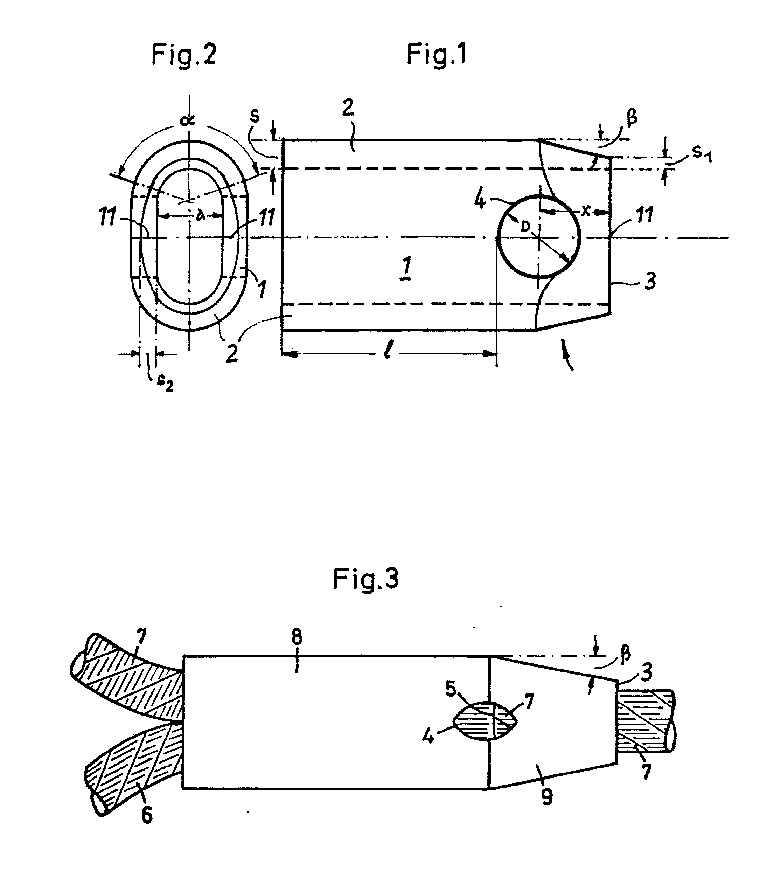

Der in den Fig. 1 und 2 dargestellte Seilklemmenrohling hat planparallele Seitenwände 1 und diese verbindende Halbrundwände 2. Er ist aus einem Rohrabschnitt entsprechend flachovalen (flachzylindrischen) Querschnitts hergestellt. Seine Abmessungen entsprechen insoweit der DIN 3093 Teil 1 (Dezember 1988). Seine axiale Länge übersteigt jedoch diejenige der zugehörigen Normlänge 1 um den in Fig. 1 entnehmbaren Teil.

Letzterer enthält einen sich zum Stirnende 3 hin verjüngenden Abschnitt 10, der nach dem Verpressen, also nach der Umformung des Rohlings in die Seilklemme (Fig. 3) im wesentlichen deren konischen Abschnitt 9 bildet. Die Halbrundwände 2 verjüngen sich jeweils in dem vom Zenitwinkel $\alpha$ 120° bestimmten Bereich von der Ausgangs-Wanddicke s bis auf die Wanddicke $s_1$ gemäß Fig. 1, und zwar unter einem Winkel $\beta$, welcher dem Konuswinkel $\beta$ des Abschnitts 9 der fertigen Seilklemme entspricht (Fig. 3). Außerhalb der vom Zenitwinkel $\alpha$ bestimmten Bereiche der Halbrundwände 2 verringert sich die Wanddicke s weniger, so daß der dem Winkel $\beta$ in Fig. 1 entsprechende Verjüngungswinkel abnimmt und ein Minimum bei den Mitten 11 der Seitenwände 1 erreicht, so daß dort die Wanddicke am Stirnende 3 das Maß $s_2$ hat, welches deutlich größer als das vorerwähnte Maß $s_1$ ist (vgl. Fig. 2). Die Zunahme der Wanddicke von $s_1$ zu $s_2$ geht - wie ebenfalls Fig. 2 erkennen läßt - stetig und kontinuierlich vor sich; zur anderen Halbrundwand 2 fällt sie in gleicher Weise wieder ab.

In dem das Längenmaß 1 übersteigenden Teil des Seilklemmenrohlings sind in beiden Seitenwänden 1 - miteinander fluchtende - Bohrungen 4 vorgesehen, welche nach dem Verpressen in der fertigen Seilklemme die der Fig. 3 entnehmbare mandelförmige Gestalt angenommen haben. Der Durchmesser D der Bohrung 4 ist zwischen etwa 10 und etwa 40 % größer als der lichte Abstand a (Fig. 2) der Seitenwände 1, und zwar 40 % größer bei relativ kleinem Maß a (für Seile von beispielsweise 8 mm Durchmesser) und etwa 10 % bei relativ großem Maß a (für Seile von beispielsweise 32 mm Durchmesser). Der Mittenabstand x der Bohrung 4 vom Stirnende 3 entspricht im wesentlichen dem lichten Abstand a der Seitenwände 1.

Nach dem - in üblicher Weise ausgeführten - Verpressen dieses Seilklemmenrohlings etwa zur Bildung der in Fig. 3 angedeuteten Seilschlaufe mit einem durchgehenden Seilstrang 7 und einem in die Seilklemme zurückgeführten Seilstrangende 6 hat die fertige Seilklemme einen im wesentlichen zylindrischen Abschnitt 8 und den schon erwähnten konischen Abschnitt 9. Durch das umgeformte Loch 4 ist das Ende 5 des nicht durchlaufenden Seilstranges 6 erkennbar, so daß geprüft werden kann, ob das Seilstrangende 6 beim Verpressen richtig in der Seilklemme plaziert wurde.

**Ansprüche**

1. Hülsenförmiger Seilklemmenrohling für die Herstellung einer einen durchgehenden Seilstrang mit einem Seilstrangende verbindenden Seilklemme durch Umformen des Rohlings zwischen komplementären Preßbacken unter hohem Druck, wobei die im wesentlichen zylindrische Seilklemme einen axial neben dem Seilstrangende liegenden konischen Abschnitt erhält und eine das Seilstrangende von außen sichtbar machende Inspektionsöffnung aufweist, bestehend aus einem Rohrabschnitt von im wesentlichen flachovalem Querschnitt mit zwei parallelen Seitenwänden und zwei diese verbindenden Halbrundwänden sowie mit einer Bohrung in mindestens einer der Seitenwände, die im Bereich des (späteren) Übergangs vom zylindrischen Abschnitt der Seilklemme in ihren konischen Abschnitt angeordnet ist,

dadurch gekennzeichnet, daß sich die Halbrundwände (2) und die Seitenwände (1) im Bereich des (späteren) konischen Abschnitts (9) der Seilklemme zum benachbarten Rohlings-Stirnende (3) hin außenseitig schräg linear verjüngen, und zwar unter einem Winkel, der bei den Halbrundwänden (2) über einen Zenitwinkel $(\alpha)$ von etwa $120^\circ$ gleich dem Konuswinkel $(\beta)$ des konischen Seilklemmenabschnitts (9) ist und anschließend kontinuierlich bis zu einem Minimalwert an den Mitten (11) der Seitenwände (1) abnimmt.

2. Seilklemmenrohling nach Anspruch 1, dadurch gekennzeichnet, daß bei einer Grunddicke (s) der Halbrund- und Seitenwände (2, 1) vom 0,3 - 0,4-fachen (insbesondere 0,38fachen) des lichten Abstands (a) am Stirnende (3) die Zenitdicke $(s_1)$ der verjüngten Halbrundwände auf etwa das 0,12 - 0,15 fache - insbesondere das 1,35fache - des lichten Abstands (a) verringert ist, während die entsprechende Dicke $(s_2)$ an den Mitten (11) der Seitenwände (1) etwa das 0,2 - 0,4fache des lichten Abstands (a) beträgt.

3. Seilklemmenrohling nach Anspruch 1 oder 2, dadurch gekennzeichnet, daß der Mittenabstand (x) der Bohrung (4) vom verjüngten Stirnende (3) etwa gleich dem lichten Abstand (a) der Seitenwände (1) ist.

4. Seilklemmenrohling nach einem der Ansprüche 1 - 3, dadurch gekennzeichnet, daß der Durchmesser (D) der Bohrung (4) größer als der lichte Abstand (a) ist, und zwar zwischen etwa 40 % bei relativ kleinem und etwa 10 % bei relativ großem Abstand (a).

Fig.2   Fig.1

Fig.3

## Europäisches Patentamt

# EUROPÄISCHER RECHERCHENBERICHT

Nummer der Anmeldung

## EP 90 10 9018

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | GB-A-1 128 333 (CABLE COVERS)<br>* Seite 2, Zeilen 7-38; Figur 2 *<br>— — — | 1,3 | F 16 G 11/02 |
| Y,D | DE-U-7 606 550 (SAHM-SEILKLEMMEN)<br>* Insgesamt *<br>— — — | 1,3 | |
| Y | US-A-3 514 817 (SAHM)<br>* Spalte 3, Zeilen 4-10; Figuren 1,4 *<br>— — — | 1,3 | |
| A | GB-A-1 232 417 (BLACK)<br>* Seite 2, Zeilen 4-20; Figuren 1-3 *<br>— — — | 1 | |
| A | US-A-3 416 197 (MARK)<br>* Spalte 2, Zeilen 48-52; Figuren 5,6 *<br>— — — | 3 | |
| D,A | DE-U-1 946 544 (ROHLAND)<br>— — — | | |
| A | GB-A-1 128 332 (CABLE COVERS)<br>— — — — — | | |

| RECHERCHIERTE SACHGEBIETE (Int. Cl.5) |
|---|
| F 16 G<br>H 01 R |

**Der vorliegende Recherchenbericht wurde für alle Patentansprüche erstellt**

| Recherchenort | Abschlußdatum der Recherche | Prüfer |
|---|---|---|
| Den Haag | 07 Dezember 90 | BARON C. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument